# EUROPÄISCHE PATENTSCHRIFT

(11) **EP 4 575 462 B1**
(45) Veröffentlichungstag und Bekanntmachung des Hinweises auf die Patenterteilung: **26.08.2026**
(21) Anmeldenummer: 23218573.6
(22) Anmeldetag: 20.12.2023
(51) Int. Cl.: G01N 21/3563, G01N 21/359, G01N 21/84, G01N 21/86

(54) **VERFAHREN ZUR BESTIMMUNG VON WEISSPIGMENT IN EINER PAPIERLAGE**
METHOD FOR DETERMINING WHITE PIGMENT IN A PAPER LAYER
PROCÉDÉ DE DÉTERMINATION DE PIGMENT BLANC DANS UNE COUCHE DE PAPIER

(43) Veröffentlichungstag der Anmeldung: 25.06.2025
(73) Patentinhaber: Flooring Technologies Ltd., Kalkara SCM1001 (MT)
(72) Erfinder: Kalwa, Norbert, 32805 Horn-Bad Meinberg (DE); Zhang, Jinming, 10247 Berlin (DE); Seidack, Georg, 16909 Wittstock/Dosse (DE)
(74) Vertreter: Maikowski & Ninnemann Patentanwälte Partnerschaft mbB

(56) Entgegenhaltungen:
- WO-A1-99/41590
- US-A- 4 845 730
- US-A- 5 795 394
- US-A1- 2007 131 862

## Beschreibung

Die vorliegende Erfindung betrifft ein Verfahren zur Bestimmung an Weißpigment in einer mit Imprägnierharz imprägnierten Papierlage, insbesondere der Art und Menge an Weißpigment oder Papierlage.

### Beschreibung

In der Holzwerkstoffindustrie werden in großem Stil imprägnierte Papiere zur Oberflächenveredelung von Holzwerkstoffplatten eingesetzt. Dies sind im wesentlichen Dekorpapiere, Overlays und Gegenzugpapiere, die bei hohem Druck und hohen Temperaturen auf Holzwerkstoffplatten aufgepresst werden Diese beschichteten Platten werden dann in den verschiedensten Anwendungen genutzt (Möbel, Innenausbau, Laminatböden usw.).

Insbesondere bei Verwendung derart beschichteter Holzwerkstoffplatten in der Möbelindustrie ist die Qualität der verwendeten Dekorpapiere von großer Bedeutung. So können bei der Herstellung von Frontelementen selbst kleinste Farbabweichungen zu einem negativen Gesamteindruck und somit zu Reklamationen führen.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen, dekorativen Ausarbeitungen erhältlich.

Um eine optimale Bedruckbarkeit zu gewährleisten, muss das als Druckgrundlage verwendete Papier eine gute Glätte und Dimensionsstabilität aufweisen. Zudem sollte das Papier eine möglichst helle Farbe aufweisen, um eine möglichst hohe Brillianz zu erreichen. Aus diesem Grund werden Dekore bevorzugt auf hellen am besten auf weißen Papieren gedruckt.

Ein Beispiel für eine Methode zur Untersuchung von Weißpigmenten auf Papiersubstraten mittels Infrarotspektroskopie ist in der Patentschrift US 5 795 394 A gegeben. 1

Hierfür werden zunächst weiße Standardpapiere oder Rohpapiere wird, bevorzugt niedergrammige Papiere aus Gründen der Kosteneinsparung, mit einem Grundgehalt einer Weißpigmentierung bereitgestellt. Die Weißpigmente werden während des Herstellungsprozesses der Rohpapiere in diese eingebracht.

Unter Rohpapieren sind dabei solche Papiere zu verstehen, die weder einer Leimung in der Masse noch eine Imprägnierung der Oberfläche mit einem Harz oder Leim ausgesetzt waren.

Rohpapiere bestehen im Wesentlichen aus Zellstoffen, Pigmenten (bevorzugt Weißpigmente) und Füllstoffen und üblichen Additiven. Zur Herstellung der von Rohpapieren können Nadelholz-Zellstoffe, Laubholz-Zellstoffe, oder Mischungen beider Zellstoffarten verwendet werden.

Als Weißpigmente kommt eine Vielzahl von anorganischen Verbindungen zum Einsatz. Der Schwerpunkt liegt allerdings nach wie vor bei Titandioxid, da es bezogen auf die jeweilige Auftragsmenge den höchsten Deckkraftzuwachs erreicht. Andere anorganische Verbindungen wie Bariumsulfat, Zinkoxid oder Calciumsulfat werden zum Teil zur Kostenreduzierung und/oder zur Modifikation der Farbe zugesetzt.

Zur Erhöhung der Deckkraft werden diese weißen Standardpapier bzw. weißen Rohpapiere mit pigmentierten Imprägnierharzen behandelt werden, so dass deren Weißgrad durch Imprägnierung mit Weißpigment-haltigen Harzen weiter erhöht wird.

Der Zusatz von Pigmenten zu Imprägnierharzen wie Harnstoff- oder Melaminharz, ist aber nicht ganz unproblematisch, da die Pigmente im Imprägnierbad zum Sedimentieren neigen. Aus diesem Grund liegt das Maximum an Pigmentdispersion, dass einem Imprägnierharz zugegeben werden kann, bei ca. 10-20 Gew%, wobei der Feststoffgehalt der Dispersion üblicherweise bei ca. 50 bis 60 Gew% liegt. Jedoch können selbst sehr gut wirksame Dispergierhilfsmittel und sehr feine Mahlungen der Pigmente (Korngrössen: 3 bis 5 µm), die für die Dispersionen verwendet werden, den Effekt der Sedimentation allenfalls etwas reduzieren aber nicht komplett verhindern. Die Sedimentation führt nicht nur zu Mengenverlusten an dem teuren Titandioxid, sondern auch zu einer Veränderung des Weissgrades des Papiers. Dieser Effekt ist mit bloßem Auge an der Imprägnierlinie nicht zu erkennen. Zudem zeigt sich, dass wenn in der Tränkwanne eine Sedimentation begonnen hat, sich diese beschleunigt fortsetzt.

Veränderungen des Weißgrades können natürlich auch auftreten, wenn bei der Rezeptierung und beim Mischen des pigmenthaltigen Imprägnierharzes Fehler auftreten. Dies alles kann dazu führen, dass in nachgeordneten Prozessschritten Qualitätsabweichungen detektiert werden oder noch gravierender bei Kunden (Möbelfabriken usw.) Reklamationen auftreten. Dies ist bei Ware, die im Korpusbereich eingesetzt wird, weniger problematisch als bei Platten, die zur Herstellung von Frontelementen genutzt werden. Dabei ist auch zu berücksichtigen, dass Kunden heute die Richtlinien hinsichtlich Farbabweichungen deutlich verschärft haben.

Die sich daraus ergebenen Nachteile sind Farbabweichungen, Pigmentverluste und die sich daraus ergebenden steigenden Kosten, durch steigenden Ausschuss und eine schwierige Qualitätskontrolle.

Der Erfindung liegt daher die technische Aufgabe zu Grunde, ein Verfahren zu entwickeln, mit welchem die Weißpigmentierung bzw. die Menge und Art an Weißpigment in bzw. auf einem als Druckgrundlage verwendeten Papier bestimmt werden kann, um so Qualitätsmängel, die diesem Parameter zu geordnet werden können, abstellen zu können. Die Anlagentechnik sollte keine erhöhten Sicherheitsstandards erfordern. Auch sollte die Bestimmung einen möglichst geringen Fehler liefern. Die Bestimmung sollte kontinuierlich erfolgen und geeignet sein eine automatisierte Anlagensteuerung bezogen auf diesen Parameter zu erreichen.

Diese Aufgabe wird durch ein Verfahren mit den Merkmalen des Anspruchs 1 gelöst.

Entsprechend wird ein Verfahren zur Bestimmung an Weißpigment in einer Papierlage, insbesondere der Menge und Art eines Weißpigmentes in einer Papierlage, bereitgestellt. Das vorliegende Verfahren umfasst die folgenden Schritte:
- Bereitstellen von mehreren Papierlagen mit jeweils unterschiedlichen quantitativ definierten Mengen an Weißpigment als Referenzproben;
- Aufnahme von mindestens einem NIR-Spektrum jeder der Referenzproben unter Verwendung von mindestens einem NIR-Messkopf in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm;
- Zuordnung der unterschiedlichen quantitativen definierten Mengen an Weißpigment in den Referenzproben zu den aufgenommenen NIR-Spektren der genannten Referenzproben; und
- Erstellung eines Kalibriermodells für den Zusammenhang zwischen den spektralen Daten der NIR-Spektren und den dazugehörigen quantitativen definierten Mengen an Weißpigment der Referenzproben mittels einer multivariaten Datenanalyse;
- Bereitstellen von mindestens einer zu vermessenden Probe einer ein Weißpigment enthaltenen Papierlage;
- Aufnehmen von mindestens einem NIR-Spektrum der imprägnierten Papierlage unter Verwendung des mindestens einen NIR-Messkopfes in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm; und
- Bestimmen der quantitativen Menge des in die imprägnierten Papierlage eingebrachten Weißpigments in der zu vermessenden Probe durch Vergleich des für die zu vermessende Probe aufgenommenen NIR-Spektrums mit dem aus den Referenzproben erstellten Kalibriermodells.

Es wird demnach ein Messverfahren bereitgestellt, das nicht Teil der Erfindung ist und welches eine Aussage über die Art und Menge eines Weißpigmentes in einer Papierlage, insbesondere einer rohen Papierlage ermöglicht. Das Messverfahren bedient sich der NIR-Spektroskopie, mit der eine kontinuierliche Bestimmung des in einer Papierlage enthaltenen Weißpigmentes möglich ist.

Mit Hilfe dieses beispielhaften Messverfahrens, das nicht Teil der Erfindung ist, ist es nunmehr möglich, den Gehalt und die Art an Weißpigment in einer Rohpapierlage zu bestimmen. Wie bereits definiert, ist unter dem Begriff "Rohpapier" eine Papierlage zu verstehen, welches (noch) nicht imprägniert ist; d.h. eine Papierlage, die nicht mit einem Imprägnierharz, insbesondere einem Formaldehyd-Harz, wie Melamin-, Harnstoff- und/Phenol-Formaldehydharz, oder anderen Harzen, wie Melamin-Ether-Harze, Acrylharze, Epoxidharze imprägniert sind und somit lediglich aus miteinander verklebten Zellstofffasern und ggf. Additiven besteht

In diesem Verfahren ist das in Rohpapierlagen verwendete Weißpigment ausgewählt aus Titandioxid, Bariumsulfat, Calciumsulfat, Calciumcarbonat und/oder Zinkoxid, oder einer Mischung davon. Bevorzugtes Weißpigment ist Titandioxid.

Entsprechend kann in einer Ausführungsform ein Rohpapier verwendet werden, welches einen (Grund)Gehalt an Titandioxid aufweist. Typischerweise liegen die Mengen an Titandioxid in solch einem weißen Rohpapier zwischen 20 und 40 Gew%, bevorzugt zwischen 25 und 35 Gew% (bezogen auf das Gesamtpapiergewicht).

Im Falle der Bestimmung eines (einzelnen) Weißpigments in der Rohpapierlage wird zunächst ein erstes NIR-Spektrum für ein Rohpapierlage ohne Weißpigment und ein weiteres NIR-Spektrum für eine Rohpapierlage enthaltend ein Weißpigment aufgenommen und aus der Differenz auf Menge und Art des Weißpigmentes geschlossen,

Im Falle der Bestimmung der Kombination von verschiedenen Weißpigmenten in der Rohpapierlage wird zunächst ein NIR-Spektrum für eine Rohpapierlage enthaltend ein erstes Weißpigment (z.B. TiO₂) und ein weiteres NIR-Spektrum für eine Rohpapierlage enthaltend ein erstes (z.B. TiO₂) und ein zweites Weißpigment (z.B. BaSO₄ oder ZnO) aufgenommen. Aus der Summe des Wertes für das Papier mit ersten und zweiten Weißpigment und dem Wert für das Papier mit dem ersten (einzelnen) Weißpigment wird letztlich die Differenz gebildet, aus welcher auf die Menge und Art des zweiten Weißpigmentes geschlossen werden kann.

Die Bestimmung der Pigmentart in einer Rohpapierlage ist z. B. wichtig, da Pigmente, wie Zinkoxid oder Calciumcarbonat, Härter, die zur Aushärtung von Imprägnierharzen (mit denen die Rohpapierlagen vor weiterer Anwendung imprägniert werden müsse) verwendet werden, neutralisieren. Dies kann zu Unterhärtungen der imprägnierten Papierlagen führen, die man sich ohne Kenntnis der Zusammensetzung der Pigmente nicht ohne weiteres erklären kann.

Auch kann der Einsatz von qualitativ minderwertigen (billigeren) Pigmenten zu schlechteren Ergebnissen bei der Lichtechtheit oder auch zu unerwünschten Wechselwirkungen beim Einsatz von oberflächenmodifizierenden Chemikalien in der Harzrezeptur führen.

Wie bereits oben angedeutet, ist der Weißgrad der Rohpapier in bestimmten Fällen nicht ausreichend bzw. nicht einheitlich, so dass eine Verwendung dieser weißen Rohpapiere als Druckgrundlage nicht möglich bzw. nicht von Vorteil ist. Entsprechend ist es notwendig, den Weißgrad von weißen Rohpapieren bzw. weißen Standardpapieren durch Imprägnierung mit einem Weißpigment-haltigen Imprägnierharz anzuheben.

Die Menge des auf das Rohpapier aufgetragenen Weißpigmentes kann dabei ebenfalls (und zusätzlich zu dem in dem Rohpapier enthaltenen Weißpigment) mittels NIR-Spektroskopie bestimmt werden.

Entsprechend wird in einer Ausführungsform der Erfindung ebenfalls ein Verfahren zur Bestimmung der Menge an Weißpigment in einer Papierlage bereitgestellt, wobei das zu bestimmende Weißpigment während einer Imprägnierung der Papierlage mit einem Imprägnierharz in die Papierlage eingebracht wird. Das vorliegende Verfahren umfasst die folgenden Schritte:
- Imprägnieren von mehreren Papierlagen mit einem Imprägnierharz mit jeweils unterschiedlichen quantitativ definierten Mengen an Weißpigment als Referenzproben;
- Aufnahme von mindestens einem NIR-Spektrum jeder der Referenzproben unter Verwendung von mindestens einem NIR-Messkopf in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm;
- Zuordnung der unterschiedlichen quantitativen definierten Mengen an Weißpigment in den Referenzproben zu den aufgenommenen NIR-Spektren der genannten Referenzproben; und
- Erstellung eines Kalibriermodells für den Zusammenhang zwischen den spektralen Daten der NIR-Spektren und den dazugehörigen quantitativen definierten Mengen an Weißpigment der Referenzproben mittels einer multivariaten Datenanalyse;
- Bereitstellen von mindestens einer zu vermessenden Probe einer imprägnierten Papierlage durch Imprägnieren von mindestens einer Papierlage mit einem Weißpigment enthaltenen Imprägnierharz,
- Aufnehmen von mindestens einem NIR-Spektrum der imprägnierten Papierlage unter Verwendung des mindestens einen NIR-Messkopfes in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm; und
- Bestimmen der quantitativen Menge des in die imprägnierten Papierlage eingebrachten Weißpigments in der zu vermessenden Probe durch Vergleich des für die zu vermessende Probe aufgenommenen NIR-Spektrums mit dem aus den Referenzproben erstellten Kalibriermodells.

Es wird demnach in einer Ausführungsform ein Messverfahren bereitgestellt, welches eine Aussage über die Menge eines Weißpigmentes ermöglicht, welches während eines Imprägnierprozesses zusammen mit dem Imprägnierharz in und auf eine Papierlage ein- oder aufgebracht wird. Das Messverfahren bedient sich der NIR-Spektroskopie, mit der eine kontinuierliche Bestimmung des beim Imprägnierprozess aufgetragenen Weißpigmentes möglich ist.

Gemäß einem Beispiel wird durch den NIR-Messkopf die Summe aus dem bereits im Rohpapier enthaltenen Weißpigment und dem durch die Imprägnierung zusätzlich in das Rohpapier eingebrachten Weißpigment bestimmt. Aus der Summe und dem Wert für das nichtpigmentierte Papier wird letztlich die Differenz gebildet.

Wie noch später im Detail erläutert, werden für das vorliegende Verfahren Kalibrationsgraden erstellt, umso eine Verbindung mit den über NIR bestimmten Spektren zu schaffen. Darüber ist es möglich auf unbekannte Mengen an Weißpigment, wie z.B. Titandioxid in oder auf der Papierlage zu schließen. Weiterhin kann über diese Kalibration eine Prozessüberwachung geschaffen werden. Diese kann z. B. über die gesamte Warenbahnbreite in Echtzeit Qualitätsdaten liefern und bei Abweichungen einen schnellen Eingriff ermöglichen.

Auch besteht die Möglichkeit über dieses Verfahren Wettbewerbsprodukte zu analysieren, Reklamationen schneller zu bearbeiten und Produktentwicklungen zu begleiten. Aus den spektroskopischen Daten kann nicht nur die Auftragsmenge, sondern auch Schwankungen im Auftrag analysiert werden.

In einer Ausführungsform des vorliegenden Verfahrens ist vorgesehen, dass das zu bestimmende Weißpigment während einer Kernimprägnierung (bzw. Vorimprägnierung) der Papierlage in die Papierlage eingebracht wird.

Unter dem Begriff der "Kernimprägnierung" bzw. "Vorimprägnierung" ist dabei eine Imprägnierung des Papierkerns zu verstehen, wobei das Imprägnierharz in die Papierlage eindringt bzw. hinein penetriert. Vorliegend erfolgt eine vollständige oder teilweise Durchtränkung der Papierlage mit dem Imprägnierharz.

Die "Kernimprägnierung" bzw. "Vorimprägnierung" erfolgt bei der Herstellung von Imprägnaten durch Auftrag des Imprägnierharzes (vorliegend mit einem Weißpigment versetzt) in einer ersten Imprägnierwanne, wo nach dem Eintauchen in die Imprägnierwanne ein Abstreifen des Harzes auf einen definierten Harzauftrag mit Hilfe von Rakeln oder Quetschwalzen erfolgt. Dann wird das Vorimprägnat in einem Schwebetrockner mit heißer Luft getrocknet (Zwischentrocknung). Es kann sich eine Oberflächenimprägnierung des Vorimprägnates mit nochmaliger Trocknung anschließen. Die Trocknungsschritte bewirken jeweils eine Reduzierung des Wassergehaltes der Papierlage bevorzugterweise auf 10-20 Gew%. Die für derartige Imprägnierungen geeigneten Anlagen sind bekannt. Beispielhaft sei auf die EP 3075906 B1 hingewiesen, in der eine Imprägnieranlage aus erster Imprägnierstation mit nachgeschalteter Trockenstation und einer zweiten Imprägnierstation mit nachgeschalteter Trockenstation beschrieben wird.

Die Bestimmung der von der Papierlage während der Kern- oder Vorimprägnierung aufgenommenen Menge an Weißpigment mittels NIR-Spektroskopie kann nach dem ersten Imprägnierschritt und Trockenschritt (d.h. nach der Vorimprägnierung) erfolgen, oder nach dem zweiten Imprägnierschritt und Trockenschritt (d.h. nach der Oberflächenimprägnierung) erfolgen, wobei letzteres bevorzugt ist.

Das vorliegende Verfahren erfordert lediglich eine einzelne NIR-Messung zur Bestimmung der Menge und Art an Weißpigment in oder auf der Papierlage. Vorteilhaft ist ebenfalls, dass die Vermessung an einer durchgängigen Papierlage durchgeführt wird, d.h. die Papierlage wird nicht zerstört.

Gemäß dem vorliegenden Verfahren werden zunächst Referenzproben von Papierlagen bereitgestellt, die jeweils unterschiedliche quantitativ definierte Mengen an Weißpigment enthalten und/oder mit einem Imprägnierharz mit jeweils unterschiedlichen quantitativ definierten Mengen an Weißpigment imprägniert sind. Wesentlich ist, dass die Referenzprobe gleichartig zu der zu vermessenden Probe ist. So sollte das Imprägnierharz der Referenzprobe die gleiche Zusammensetzung wie das zu vermessende Imprägnierharz aufweisen. Die Gleichartigkeit von zu vermessender Probe und Referenzprobe kann insbesondere bei Verwendung von Imprägnierharzen mit Zusatzstoffen wie Flammschutzmitteln, Fasern, weiteren Additiven wesentlich sein.

Von diesen Referenzproben werden zumindest ein NIR-Spektrum in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm aufgenommen.

Die bekannte quantitative Zusammensetzung der Rohpapierlage und/oder des Imprägnierharzes (d.h. der jeweils bekannte Gehalt an Weißpigment) wird dann den jeweils aufgenommen NIR-Spektren dieser Referenzproben zugeordnet wird, d.h. die unterschiedlichen quantitativen definierten Mengen an Weißpigment in den Referenzproben werden den aufgenommenen NIR-Spektren der genannten Referenzproben zugeordnet. Es wird ein Kalibriermodell für den Zusammenhang zwischen den spektralen Daten der NIR-Spektren der Referenzproben und den dazugehörigen Parameterwerten mittels einer multivariaten Datenanalyse erstellt; d.h. zu jedem Parameterwert der Referenzprobe korrespondiert ein NIR-Spektrum der Referenzprobe. Die für die verschiedenen Parameter erstellten Kalibriermodelle werden in einem geeigneten Datenspeicher hinterlegt.

Anschließend wird mindestens eine (rohe) Papierlage mit einer unbekannten Menge an Weißpigment bereitgestellt und/oder mit einem Weißpigment (in unbekannter Menge) enthaltenen Imprägnierharz imprägniert und die (rohe) Papierlage und/oder imprägnierte Papierlage als Probe vermessen. Hierzu wird von der zu vermessenden Probe mindestens einem NIR-Spektrum unter Verwendung des mindestens einen NIR-Messkopfes in einem Wellenlängenbereich zwischen 900 nm und 1700 nm, bevorzugt zwischen 1100 nm und 1700 nm, insbesondere bevorzugt zwischen 1350 nm und 1650 nm, ganz besonders bevorzugt zwischen 1400 nm und 1600 nm, besonders vorteilhaft zwischen 1450 nm und 1550 nm aufgenommen.

Die quantitative Menge des in der (rohen) Papierlage enthaltenen Weißpigments und/oder des in die imprägnierten Papierlage eingebrachten Weißpigments in der jeweils zu vermessenden Probe kann dann durch Vergleich des für die zu vermessende Probe aufgenommenen NIR-Spektrums mit dem aus den Referenzproben erstellten Kalibriermodells bestimmt werden.

Ein Vergleich und die Interpretation der NIR-Spektren erfolgt sinnvollerweise über den gesamten aufgenommenen Spektralbereich. Dies wird vorteilhaft mit einer an sich bekannten multivariaten Datenanalyse (MDA) durchgeführt. Bei multivariaten Analysemethoden werden in an sich bekannter Weise typischerweise mehrere statistische Variablen zugleich untersucht. Hierzu wird bei diesen Methoden üblicherweise die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares Regression (partielle Regression der kleinsten Quadrate, PLS) wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

In einer weiteren Ausführungsform ist vorgesehen, für die Erstellung des Kalibriermodells spektrale Daten aus dem NIR-Spektralbereich zwischen 1400 nm und 1600 nm, bevorzugt zwischen 1450 und 1550 nm und/oder zwischen 1150 und 1300 nm verwendet werden, die mittels geeigneter mathematischer Methoden vorbehandelt werden und anschließend der multivariaten Datenanalyse zugeführt werden.

Die Bedeutung einer Wellenlänge für die Vorhersage des Harzverhältnisses aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Regressionsmodell für die Bestimmung der Menge und Art an Weißpigment, dass der Wellenlängenbereich zwischen 1450 nm und 1550 mit Maximum bei 1480-1490 nm für die Berechnung des Modells am wichtigsten ist, da hier die Beträge der Regressionskoeffizienten am größten sind. Die anderen Bereiche im Spektrum haben zwar geringeren Informationsgehalt in Bezug auf die NIR-Messung, tragen aber dennoch dazu bei, die weiteren Informationen bzw. störenden Einflussgrößen (wie Transparenz der Schicht, Oberflächenbeschaffenheit des Trägermaterials usw.) zu berücksichtigen bzw. zu minimieren.

Zur Eliminierung von störenden Einflüssen (wie z.B. Beschaffenheit der Oberfläche des Trägermaterials, Farbigkeit der Proben, Lichtstreuung an Feststoffpartikeln oder anderen Additiven usw.) ist es notwendig, die spektralen Daten mit mathematischen Vorbehandlungsmethoden (z. B. derivative Datenvorbehandlung, Standardisierung gemäß SNVT (Standard Normal Variate Transformation), multiplikative Signal-Korrektur (EMSC, Extended Multiplicative Signal Correction usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche oder an den Feststoffpartikeln in der Beschichtung berücksichtigt.

Aus den vorbehandelten Daten wird mit Hilfe der multivariaten Datenanalyse ein Kalibriermodell entwickelt, das alle bei der Kalibrierung verwendeten Dekore beinhaltet.

Entsprechend erfolgen der Vergleich und die Interpretation der NIR-Spektren bevorzugt im Spektralbereich zwischen 1450 und 1550 nm unter Verwendung der multivariaten Datenanalyse MDA. Bei multivariaten Analysemethoden werden in an sich bekannter Weise typischerweise mehrere statistische Variablen zugleich untersucht. Hierzu wird die in einem Datensatz enthaltene Zahl von Variablen reduziert, ohne gleichzeitig die darin enthaltene Information zu mindern.

Auch zur Anhebung des Weißgrades der Papierlage mittels Imprägnierung, wird Titandioxid bevorzugt alleine als Weißpigment verwendet. Es kann aber auch in Kombination mit weiteren Weißpigmenten, insbesondere in Kombination mit Bariumsulfat und/oder Zinkoxid, verwendet werden. Bevorzugte Kombinationen sind Titandioxid und Bariumsulfat oder Titandioxid und Zinkoxid. Möglich ist auch eine Kombination aus Titandioxid, Bariumsulfat und Zinkoxid.

Die Partikelgröße des im Imprägnierharz verwendeten Weißpigmentes liegt zwischen 1 und 10 µm, bevorzugt zwischen 2 und 8 µm, insbesondere bevorzugt zwischen 3 und 5 µm.

In einer weiteren Ausführungsform des vorliegenden Verfahrens ist vorgesehen, dass das Imprägnierharz zwischen 1,0 bis 10,0 Gew% (bezogen auf die Gesamtmenge an Imprägnierharz) Titandioxid als Weißpigment, bevorzugt zwischen 2,0 und 8,0 Gew% Titandioxid, insbesondere bevorzugt zwischen 3,0 und 5,0 Gew% Titandioxid enthält.

Hierfür werden zwischen 2 bis 20 Gew%, bevorzugt zwischen 4 bis 16 Gew%, insbesondere bevorzugt zwischen 6 und 10 Gew% einer Titandioxiddispersion mit einem Feststoffgehalt an Titandioxid von 50 Gew% dem Imprägnierharz zugesetzt. Bevorzugte Mengen sind 5, 10 oder 15 Gew% einer ca. 50 Gew%igen Titandioxiddispersion.

In einer anderen Ausführungsform ist vorgesehen, dass das Imprägnierharz zwischen 5 bis 10 Gew% Bariumsulfat und/oder Zinkoxid als Weißpigment alleine oder in Kombination mit Titandioxid enthält. Entsprechend werden bevorzugt 10 oder 20 Gew% einer Dispersion mit einem Feststoffgehalt an Bariumsulfat und/oder Zinkoxid von ca. 50 Gew% dem Imprägnierharz zugesetzt.

In einer weiteren Ausführungsform ist das mindestens eine das Weißpigment enthaltene Imprägnierharz für die Kern- bzw. Vorimprägnierung der Papierlage ein Formaldehydharz, insbesondere ein Harnstoff-Formaldehydharz, ein Melamin-Formaldehydharz oder eine Mischung davon, insbesondere bevorzugt ein Harnstoff-Formaldehydharz.

Wird zur Kern- bzw. Vorimprägnierung eine Mischung aus Melamin-Formaldehyd-Harz und Harnstoff-Formaldehyd-Harz verwendet, kann das quantitative Verhältnis von Melamin-Formaldehyd-Harz und Harnstoff-Formaldehyd-Harz in der verwendeten Harzmischung zwischen 90 Gew% : 10 Gew% und 10 Gew% : 90 Gew%, bevorzugt zwischen 75 Gew% : 25 Gew% und 25 Gew%: 75 Gew%, insbesondere bevorzugt zwischen 55 Gew%: 45 Gew% und 45 Gew%: 55 Gew% betragen.

Der Harzauftrag für die Kern- bzw. Vorimprägnierung der Papierlage liegt bei 80 bis 100 Gew%, bevorzugt bei 85 bis 95 Gew%, besonders bevorzugt bei 90 Gew%.

In einer weiter bevorzugten Ausführungsform wird die vorimprägnierte bzw. kernimprägnierte Papierlage mit mindestens einem weiteren Imprägnierharz oberflächenimprägniert. Das für die Oberflächenimprägnierung verwendete Imprägnierharz kann ebenfalls ein Weißpigment enthalten. Bevorzugt ist jedoch, wenn das Imprägnierharz zur Oberflächenimprägnierung kein Weißpigment enthält.

Das für die Oberflächenimprägnierung verwendete Imprägnierharz ist ebenfalls ein Formaldehydharz, insbesondere ein Melamin-Formaldehydharz.

Der Harzauftrag für die Oberflächenimprägnierung der Papierlage liegt bei 30 bis 50 Gew%, bevorzugt bei 35 bis 45 Gew%, besonders bevorzugt bei 40 Gew%.

Der Gesamtharzauftrag für Kernimprägnierung und Oberflächenimprägnierung liegt somit bei 110 bis 150 Gew%, bevorzugt bei 120 bis 140 Gew%, besonders bevorzugt bei 130 Gew%.

In einer weiteren Ausführungsform weist die zu vermessende und/oder zu imprägnierende Papierlage ein Papiergewicht zwischen 50 und 100 g/m², bevorzugt zwischen 60 und 80 g/m², insbesondere zwischen 65 und 75 g/m² auf.

In einer besonders bevorzugten Ausführungsform besteht die zu imprägnierende Papierlage aus Rohpapier. Unter dem Begriff "Rohpapier" ist dabei eine Papier zu verstehen, welches (noch) nicht imprägniert ist; d.h. eine Papierlage, die nicht mit einem Imprägnierharz, insbesondere einem Formaldehyd-Harz, wie Melamin-, Harnstoff- und/Phenol-Formaldehydharz, oder anderen Harzen, wie Melamin-Ether-Harze, Acrylharze, Epoxidharze imprägniert sind und somit lediglich aus miteinander verklebten Zellstofffasern und ggf. Additiven besteht.

Wie bereits oben angedeutet, wird durch die Imprägnierung mit einem Weißpigment-haltigen Imprägnierharz der Weißgrad von weißen Standardpapieren angehoben. Entsprechend kann in einer Ausführungsform für die Imprägnierung ein Rohpapier verwendet werden, welches bereits einen (Grund)Gehalt an Titandioxid aufweist. Typischerweise liegen die Mengen an Titandioxid in solch einem weißen Rohpapier zwischen 25 und 35 Gew% (bezogen auf das Gesamtpapiergewicht).

Das vorliegende Verfahren zur Bestimmung der Menge an Weißpigment in einer(rohen) Papierlage und/oder imprägnierten Papierlage kann kontinuierlich und online in einer Produktionslinie, insbesondere in einer Imprägnieranlage erfolgen.

Die Bestimmung der Menge an Weißpigment in einer (rohen) Papierlage ist vorteilhafterweise einer Imprägnieranlage vorgelagert, z.B. an der Abwicklung der Papierlage vor der Imprägnieranlage erfolgen oder bei der Wareneingangsprüfung im Labor.

Eine Anlage zur Imprägnierung von mindestens einer durch die Anlage laufenden Papierlage umfasst dabei
- optional Papierabwicklung und Wechselvorrichtung
- eine erste Imprägnierstation zur Vorimprägnierung (Kernimprägnierung) von mindestens einer Papierlage mit einem ein Weißpigment enthaltenden Imprägnierharz;
- eine zweite Imprägnierstation zur Oberflächenimprägnierung der mindestens einen vorimprägnierten Papierlage,
- wobei nach der zweiten Imprägnierstation mindestens ein NIR-Messkopf, insbesondere mindestens ein NIR-Multimesskopf, zur Aufnahme von mindestens einem NIR-Spektrum der mit dem Weißpigment imprägnierten Papierlage vorgesehen ist, und
- optional Clipper und Ablegetisch.

Der NIR-Messkopf ist bevorzugt so angeordnet, dass die Oberseite der imprägnierten Papierlage bestrahlt wird. Generell ist es aber auch möglich weitere NIR-Messköpfe in der Imprägnieranlage zur Vermessung der Oberseite und Unterseite der imprägnierten Papierlage vorzusehen.

Der NIR-Messkopf kann nach der Kernimprägnierung vor oder nach dem ersten Trockner lokalisiert sein. Eine weitere Möglichkeit wäre nach dem zweiten Trockner vor dem Clipper.

Es ist insbesondere bevorzugt, wenn der mindestens eine NIR-Messkopf über die Breite der Papierlage traversiert und bestimmte Problembereiche (z. B. im Rand- oder Mittelbereich der Platten usw.) analysiert. Entsprechend bewegt sich der mindestens eine NIR-Messkopf quer zur Laufrichtung der (vor)imprägnierten Papierlage. Außerdem stehen die Messwerte sofort zur Verfügung und erlauben einen sofortigen Eingriff in den Prozess. Dies ist bei anderen Verfahren nicht ohne weiteres möglich.

In einer Ausführungsform der vorliegenden Imprägnieranlage ist nach der ersten Imprägnierstation eine erste Trockenstation vorgesehen, wobei der mindestens eine NIR-Messkopf nach der ersten Trockenstation angeordnet ist.

In einer konkreteren Ausführungsform umfasst die Imprägnieranlage Imprägnierwannen bzw. Imprägniertauchbäder (als Imprägnierstationen), ggfs. eine Atemstrecke, ein Rakelsystem / Quetschwalzenpaar zur Entfernung von überschüssigem Harz, mindestens einen Trockner (z.B. ein Schwebetrockner), optional ein Rasterwerk und ein optional zweiter Trockner, mindestens eine Abkühlvorrichtung (z.B. ein Kühlwalzsystem).

Es wird somit ein Verfahren bereitgestellt, in welchem durch die Verwendung eines NIR-Messkopfes, die Menge an Weißpigment in einer (vor)imprägnierten Papierlage aus einem NIR-Spektrum bestimmt werden kann, und zwar durch eine berührungslose Messung. Die mit dem Messkopf oder den Messköpfen ermittelten Daten werden in einer vorteilhaften Ausprägung der Erfindung direkt zur Anlagensteuerung oder -regelung verwendet.

Zudem wird in einer weiteren vorteilhaften Ausprägung der Erfindung durch die Speicherung der Daten eine Verbesserung der Qualitätskontrolle ermöglicht. Auch bei Anlagenversuchen können die gespeicherten Daten vorteilhaft einen Beitrag zur Auswertung liefern, z.B. Inbetriebnahme einer Anlage bei Neuinstallation oder nach einer Wartung oder Reparatur oder zu in-situ Testzwecken von neuen Produktions- oder Messverfahren. Durch das sofortige Vorliegen der Messwerte und der hohen Messfrequenz wird eine sehr enge Kontrolle bzw. Steuerung oder Regelung der Anlagen ermöglicht.

Das vorliegende Verfahren ermöglicht die Bereitstellung der Messwerte in kurzer Zeit (online, bevorzugt ohne störende Zeitverzögerung) im Vergleich zu herkömmlichen (bekannten) Messverfahren. Die Messdaten können zur Qualitätssicherung, Forschung und Entwicklung, zur Prozesskontrolle, Prozessregelung, Prozesssteuerung usw. eingesetzt werden. Durch den Messvorgang wird die Produktionsgeschwindigkeit usw. nicht reduziert. Grundsätzlich wird damit die Überwachung der Produktion verbessert. Zudem werden auch Stillstandszeiten durch Qualitätsbestimmungen und Anlagenjustierungen reduziert.

Die Vorteile des vorliegenden Verfahrens sind vielfältig: Berührungslose Multiparameterbestimmung ("real time"- oder "Echtzeit"-Messung) mit deutlich reduzierter zeitlicher Verzögerung in der Auswertung der gemessenen Parameterwerte; verbesserte Anlagensteuerung bzw. -regelung, Verringerung des Ausschusses, Verbesserung der Qualität der auf der Anlage hergestellten Produkte, Verbesserung der Anlagenverfügbarkeit.

Das Steuerungssystem der Imprägnieranlage umfasst mindestens eine computergestützte Auswerteeinheit (bzw. Prozessoreinheit) und eine Datenbank. In der Auswerteeinheit erfolgt der Abgleich bzw. Vergleich des für das Produkt (d.h. verpresstes poröses Beschichtungsmaterial) gemessenen NIR-Spektrums mit den für die jeweils einzelnen Parameter erstellten Kalibriermodellen. Die so bestimmten Parameterdaten werden in der Datenbank gespeichert.

Die mit dem vorliegenden spektroskopischen Verfahren bestimmten Daten können zur Steuerung der Imprägnieranlage verwendet werden. Die berührungslos gemessenen Parameterwerte des NIR-Multimesskopfes ("Ist-Werte") können, wie zuvor bereits beschrieben, direkt und in "real time" für die Steuerung bzw. Regelung der betreffenden Anlage verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Produktionslinie verwendet.

Für den Abgleich und die Steuerung der Imprägnieranlage wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der Imprägnieranlage gespeichert.

Die Erfindung wird nachfolgend an Ausführungsbeispielen unter Bezugnahme auf die Figuren näher erläutert. Es zeigen:
- Figur 1: NIR-Spektren von Titandioxid enthaltene rohe Papierlagen, von mit Titandioxid imprägnierten Papierlagen und Referenzproben,
- Figur 2: NIR-Spektren von mit Titandioxid imprägnierten Papierlagen und Referenzproben, und
- Figur 3: NIR-Spektren von mit Titandioxid und Zinkoxid/Bariumsulfat imprägnierten Papierlagen und Referenzproben.

### Ausführungsbeispiel 1:

Ein weißes (rohes) Dekorpapier (Papiergrammatur: 65 g/m²), das ein Gehalt an Titandioxid von ca. 25 Gew% besaß, wurden zunächst mit einem Harnstoffharz (Kernimprägnierung) und dann mit einem Melaminharz (Oberflächenimprägnierung) imprägniert ( Harzauftrag gesamt: 130 Gew%, Harnstoffharz: 90 Gew%, Melaminharz: 40 Gew% ), zwischengetrocknet und in einer Laborpresse auf eine Spanplatte aufgepresst (Standard 65 g/m²).

Zusätzlich wurde ein Overlay ohne Weißpigment ( Papiergewicht: 35 g/m²) mit den gleichen Harzen imprägniert. Der Harzauftrag lag bei 400 Gew%. Die Harzverteilung war anaolg wie bei den Weißpapieren. Das pigmentfreie Overlay diente als Referenzprobe bzw. Nullprobe (OV ohne TiO₂). Es wurde unter den gleichen Bedingungen auf eine Spanplatte aufgepresst.

Mit dem Dekorpapier mit dem Flächengewicht von 65 g/m² wurden anschließend zwei weitere Probenmuster erzeugt. Dabei wurden dem zur Kernimprägnierung eingesetzten Harnstoffharz 5 bzw. 15 Gew% einer Titandioxiddispersion ( Gehalt an Titandioxid: ca. 50 Gew% ) zugesetzt. Das Melaminharz für die Oberflächenimprägnierung enthielt keine Titandioxiddispersion. Die Imprägnierung erfolgte analog zur ersten Imprägnierung. Der Gesamtharzauftrag lag ebenfalls bei ca. 130 Gew%. Auch diese beiden Imprägnate wurden in der Laborpresse unter identischen Bedingungen auf eine Spanplatte aufgepresst (Fentak 17-5%-TiO₂, Fentak 17-15%-TiO₂).

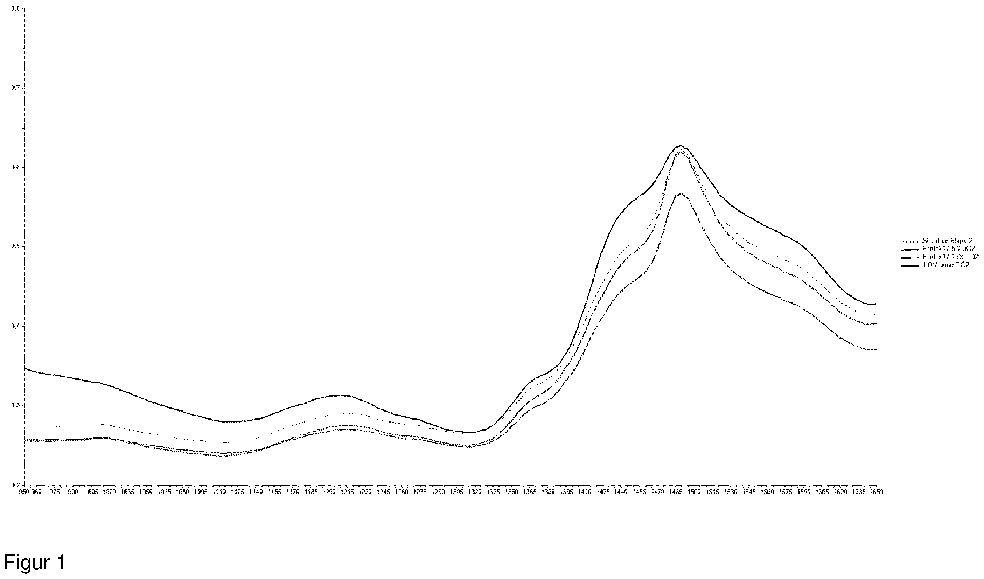

Danach wurden NIR-Spektren der Referenzprobe und der drei Probenmuster aufgenommen (siehe NIR-Spektrum der Figur 1). Wie sich zeigte sind die unterschiedlichen Titandioxidgehalte deutlich im Spektrum erkennbar.

### Ausführungsbeispiel 2:

Ein weißes Dekorpapiere (Papiergrammatur: 65 g/m²), das ein Gehalt an Titandioxid von ca. 25 % besaß, wurden zunächst mit einem Harnstoffharz (Kernimprägnierung) und dann mit einem Melaminharz (Oberflächenimprägnierung) imprägniert ( Harzauftrag gesamt: 130 Gew%, Harnstoffharz: 90 Gew%, Melaminharz: 40 Gew% ), zwischengetrocknet und in einer Laborpresse auf eine Spanplatte aufgepresst. Dies diente als Referenzproben bzw. Nullproben (Standard 65g/m²).

Mit dem Dekorpapier mit dem Flächengewicht von 65 g/m² wurden anschließend zwei weitere Probenmuster erzeugt. Dabei wurden dem zur Kernimprägnierung eingesetzten Harnstoffharz 5 bzw. 15 Gew% einer Titandioxiddispersion ( Gehalt an Titandioxid: ca. 50 Gew% ) zugesetzt. Das Melaminharz für die Oberflächenimprägnierung enthielt keine Titandioxiddispersion. Die Imprägnierung erfolgte analog zur ersten Imprägnierung. Der Gesamtharzauftrag lag ebenfalls bei ca. 130 Gew%. Auch diese beiden Imprägnate wurden in der Laborpresse unter identischen Bedingungen auf eine Spanplatte aufgepresst (Fentak 17-5%-TiO₂, Fentak 17-15%-TiO₂).

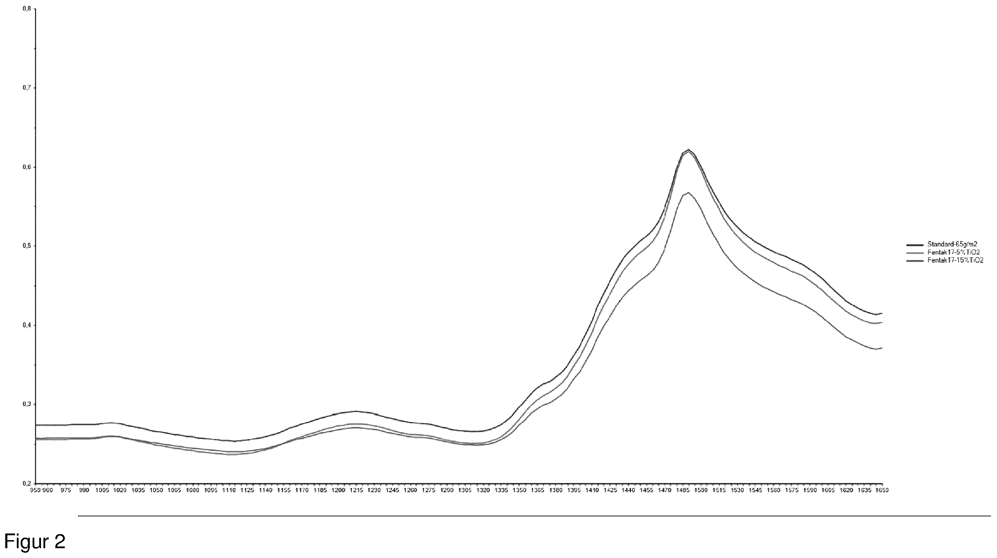

Danach wurden NIR-Spektren der Referenzprob und der zwei Probenmuster aufgenommen (siehe NIR-Spektrum der Figur 2). Wie sich zeigte sind die unterschiedlichen Titandioxidgehalte deutlich im Spektrum erkennbar.

### Ausführungsbeispiel 3:

Ein weißes Dekorpapier (Papiergrammatur: 65 g/m²), das ein Gehalt an Titandioxid von ca. 25 Gew% besaß, wurden zunächst mit einem Harnstoffharz ( Kernimprägnierung ) und dann mit einem Melaminharz (Oberflächenimprägnierung) imprägniert ( Harzauftrag gesamt: 130 Gew%, Harnstoffharz: 90 Gew%, Melaminharz: 40 Gew%, Feuchte: ca. 6 Ge ). Dabei wurden dem zur Kernimprägnierung eingesetzten Harnstoffharz 10% einer Titandioxiddispersion ( Gehalt an Titandioxid: ca. 50 Gew% ) zugesetzt. Es wurde zwischengetrocknet und in einer Laborpresse auf eine Spanplatte aufgepresst (Nullprobe, Fen-19-10%-1).

Mit dem Dekorpapier mit dem Flächengewicht von 65 g/m² wurden anschließend weitere Muster erzeugt, Das Melaminharz für die Oberflächenimprägnierung enthielt dabei wiederum keine Titandioxiddispersion. Die Imprägnierung erfolgte analog zur ersten Imprägnierung. Der Harzauftrag lag ebenfalls bei ca. 130 Gew% und die Feuchte bei ca. 6 Gew%. Auch der Anteil an Harnstoff- bzw. Melaminharz blieb gleich. Weiter wurden Titandioxiddispersionen mit 10 bzw. 20 Gew% an Zinkoxid und Bariumsulfat hergestellt und analog zur ersten Imprägnierung verwendet. Auch diese vier Imprägnate wurden in der Laborpresse unter identischen Bedingungen auf eine Spanplatte aufgepresst (Fen-19-10%-Ba10%, Fen-19-10%-Ba20%, Fen-19-10%-Zn10%, Fen-19-10%-Zn20%).

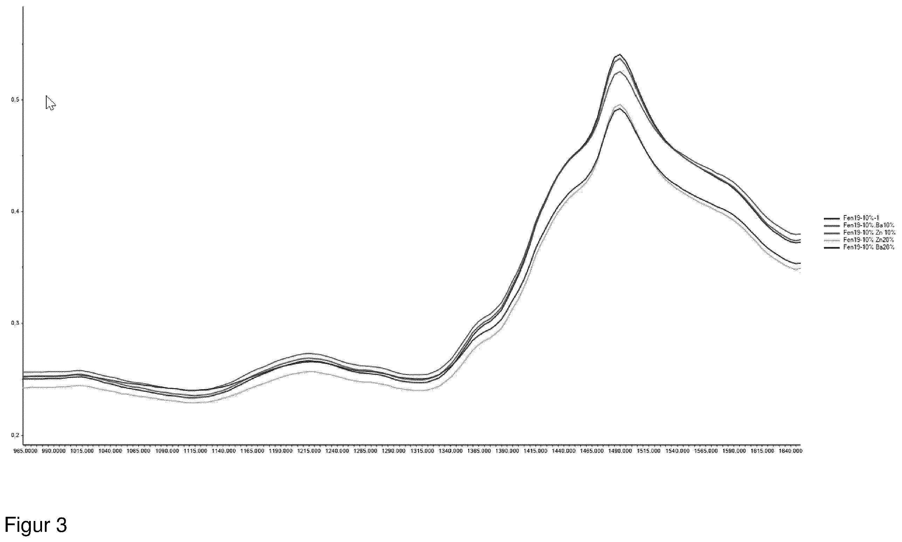

Danach wurden NIR-Spektren der der einen Referenzproben und der vier Probenmuster aufgenommen (siehe NIR-Spektrum der Figur 3). Wie sich zeigte sind die unterschiedlichen Gehalte an Zinkoxid und Bariumsulfat deutlich im Spektrum erkennbar.

## Patentansprüche

1. Verfahren zur Bestimmung an Weißpigment in einer mit Imprägnierharz imprägnierten Papierlage, insbesondere der Menge und Art eines Weißpigmentes der Papierlage, umfassend die Schritte
- Bereitstellen von mehreren mit Imprägnierharz imprägnierten Papierlagen mit jeweils unterschiedlicher quantitativ definierten Mengen an Weißpigment als Referenzproben;
- Aufnahme von mindestens einem NIR-Spektrum jeder der Referenzproben unter Verwendung von mindestens einem NIR-Messkopf in einem Wellenlängenbereich zwischen 1350 nm und 1650 nm, ganz besonders bevorzugt zwischen 1400 nm und 1600 nm, besonders vorteilhaft zwischen 1450 nm und 1550 nm;
- Zuordnung der unterschiedlichen quantitativen definierten Mengen an Weißpigment in den Referenzproben zu den aufgenommenen NIR-Spektren der genannten Referenzproben; und
- Erstellung eines Kalibriermodells für den Zusammenhang zwischen den spektralen Daten der NIR-Spektren und den dazugehörigen quantitativen definierten Mengen an Weißpigment der Referenzproben mittels einer multivariaten Datenanalyse;
- Bereitstellen von mindestens einer zu vermessenden Probe einer ein Weißpigment enthaltenen Papierlage;
- Aufnehmen von mindestens einem NIR-Spektrum der imprägnierten Papierlage unter Verwendung des mindestens einen NIR-Messkopfes in einem Wellenlängenbereich zwischen 1350 nm und 1650 nm, ganz besonders bevorzugt zwischen 1400 nm und 1600 nm, besonders vorteilhaft zwischen 1450 nm und 1550 nm; und
- Bestimmen der quantitativen Menge des in die imprägnierten Papierlage eingebrachten Weißpigments in der zu vermessenden Probe durch Vergleich des für die zu vermessende Probe aufgenommenen NIR-Spektrums mit dem aus den Referenzproben erstellten Kalibriermodells.

2. Verfahren nach Anspruch 1, **dadurch gekennzeichnet, dass** die Menge an Weißpigment in einer Papierlage bestimmt wird, wobei das zu bestimmende Weißpigment während einer Imprägnierung der Papierlage mit einem Imprägnierharz in die Papierlage eingebracht wird,
umfassend die Schritte
- Imprägnieren von mehreren Papierlagen mit einem Imprägnierharz mit jeweils unterschiedlichen quantitativ definierten Mengen an dem Weißpigment als Referenzproben;
- Aufnahme von mindestens einem NIR-Spektrum jeder der Referenzproben unter Verwendung von mindestens einem NIR-Messkopf in einem Wellenlängenbereich zwischen 1350 nm und 1650 nm, ganz besonders bevorzugt zwischen 1400 nm und 1600 nm, besonders vorteilhaft zwischen 1450 nm und 1550 nm;
- Zuordnung der unterschiedlichen quantitativen definierten Mengen an Weißpigment in den Referenzproben zu den aufgenommenen NIR-Spektren der genannten Referenzproben; und
- Erstellung eines Kalibriermodells für den Zusammenhang zwischen den spektralen Daten der NIR-Spektren und den dazugehörigen quantitativen definierten Mengen an Weißpigment der Referenzproben mittels einer multivariaten Datenanalyse;
- Bereitstellen von mindestens einer zu vermessenden Probe einer imprägnierten Papierlage durch Imprägnieren von mindestens einer Papierlage mit einem Weißpigment enthaltenen Imprägnierharz,
- Aufnehmen von mindestens einem NIR-Spektrum der imprägnierten Papierlage unter Verwendung des mindestens einen NIR-Messkopfes in einem Wellenlängenbereich zwischen 1350 nm und 1650 nm, ganz besonders bevorzugt zwischen 1400 nm und 1600 nm, besonders vorteilhaft zwischen 1450 nm und 1550 nm; und
- Bestimmen der quantitativen Menge des in die imprägnierten Papierlage eingebrachten Weißpigments in der zu vermessenden Probe durch Vergleich des für die zu vermessende Probe aufgenommenen NIR-Spektrums mit dem aus den Referenzproben erstellten Kalibriermodells.

3. Verfahren nach einem der vorhergehenden Ansprüche, **dadurch gekennzeichnet, dass** das zu bestimmende Weißpigment Titandioxid, Bariumsulfat, Calciumsulfat und/oder Zinkoxid, oder eine Mischung davon, insbesondere Titandioxid, umfasst.

4. Verfahren nach Anspruch 2-3, **dadurch gekennzeichnet, dass** das zu bestimmende Weißpigment während einer Kernimprägnierung (bzw. Vorimprägnierung) der Papierlage in die Papierlage eingebracht wird.

5. Verfahren nach einem der Ansprüche 2-4, **dadurch gekennzeichnet, dass** das Imprägnierharz zwischen 1,0 bis 10,0 Gew% (bezogen auf die Gesamtmenge an Imprägnierharz) Titandioxid als Weißpigment, bevorzugt zwischen 2,0 und 8,0 Gew% Titandioxid, insbesondere bevorzugt zwischen 3,0 und 5,0 Gew% Titandioxid enthält.

6. Verfahren nach einem der Ansprüche 2-5, **dadurch gekennzeichnet, dass** das Imprägnierharz zwischen 5 bis 10 Gew% Bariumsulfat und/oder Zinkoxid als Weißpigment enthält.

7. Verfahren nach einem der Ansprüche 2-6, **dadurch gekennzeichnet, dass** das mindestens eine das Weißpigment enthaltene Imprägnierharz ein Formaldehydharz, insbesondere ein Harnstoff-Formaldehydharz, ein Melamin-Formaldehydharz oder eine Mischung davon, insbesondere bevorzugt ein Harnstoff-Formaldehydharz ist.

8. Verfahren nach einem der Ansprüche 2-7, **dadurch gekennzeichnet, dass** die vorimprägnierte / kernimprägnierte Papierlage mit mindestens einem weiteren Imprägnierharz oberflächenimprägniert wird.

9. Verfahren nach Anspruch 8, **dadurch gekennzeichnet, dass** das Imprägnierharz zur Oberflächenimprägierung kein Weißpigment anthält.

10. Verfahren nach Anspruch 8 oder 9, **dadurch gekennzeichnet, dass** das für die Oberflächenimprägnierung verwendete Imprägnierharz ein Formaldehydharz, insbesondere ein Melamin-Formaldehydharz ist.

11. Verfahren nach einem der vorhergehenden Ansprüche, **dadurch gekennzeichnet, dass** die zu Papierlage ein Papiergewicht zwischen 50 und 100 g/m², bevorzugt zwischen 60 und 80 g/m², insbesondere zwischen 65 und 75 g/m² aufweist.

12. Verfahren nach einem der vorhergehenden Ansprüche, **dadurch gekennzeichnet, dass** die Bestimmung der Menge an Weißpigment in der Papierlage kontinuierlich und online erfolgt.

13. Verfahren nach einem der vorhergehenden Ansprüche, **dadurch gekennzeichnet, dass** für die Erstellung des Kalibriermodells spektrale Daten aus dem gesamten aufgenommenen Spektralbereich verwendet werden.

14. Verfahren nach einem der vorhergehenden Ansprüche, **dadurch gekennzeichnet, dass** für die Erstellung des Kalibriermodells spektrale Daten aus dem NIR-Spektralbereich zwischen 1400 nm und 1600 nm, bevorzugt zwischen 1450 und 1550 nm verwendet werden, die mittels geeigneter mathematischer Methoden vorbehandelt werden und anschließend der multivariaten Datenanalyse zugeführt werden.

## Claims

1. A method for determining white pigment in a paper layer impregnated with impregnating resin, in particular the amount and type of white pigment in the paper layer,
comprising the steps
- providing a plurality of paper layers impregnated with impregnating resin, each containing different quantitatively defined amounts of white pigment, as reference samples;
- recording at least one NIR spectrum of each of the reference samples using at least one NIR measuring head in a wavelength range between 1350 nm and 1650 nm, most preferably between 1400 nm and 1600 nm, and particularly advantageously between 1450 nm and 1550 nm;
- assigning the different quantitatively defined amounts of white pigment in the reference samples to the recorded NIR spectra of said reference samples; and
- creating a calibration model for the relationship between the spectral data of the NIR spectra and the corresponding quantitatively defined amounts of white pigment in the reference samples using multivariate data analysis;
- providing at least one sample of a paper layer containing white pigment to be measured;
- recording at least one NIR spectrum of the impregnated paper layer using the at least one NIR measuring head in a wavelength range between 1350 nm and 1650 nm, most preferably between 1400 nm and 1600 nm, particularly advantageously between 1450 nm and 1550 nm; and
- determining the quantitative amount of the white pigment introduced into the impregnated paper layer in the sample to be measured by comparing the NIR spectrum recorded for the sample to be measured with the calibration model created from the reference samples.

2. Method according to claim 1, **characterized in that** the amount of white pigment is determined in a paper layer, wherein the white pigment to be determined is introduced into the paper layer during impregnation of the paper layer with an impregnating resin,
comprising the steps
- impregnating a plurality of paper layers with an impregnating resin, each containing different quantitatively defined amounts of the white pigment, as reference samples;
- recording at least one NIR spectrum of each of the reference samples using at least one NIR measuring head in a wavelength range between 1350 nm and 1650 nm, most preferably between 1400 nm and 1600 nm, particularly advantageously between 1450 nm and 1550 nm;
- assigning the different quantitatively defined amounts of white pigment in the reference samples to the recorded NIR spectra of said reference samples; and
- creating a calibration model for the relationship between the spectral data of the NIR spectra and the corresponding quantitatively defined amounts of white pigment in the reference samples using multivariate data analysis;
- providing at least one sample of an impregnated paper layer to be measured by impregnating at least one paper layer with an impregnating resin containing a white pigment,
- recording at least one NIR spectrum of the impregnated paper layer using the at least one NIR measuring head in a wavelength range between 1350 nm and 1650 nm, most preferably between 1400 nm and 1600 nm, particularly advantageously between 1450 nm and 1550 nm; and
- determining the quantitative amount of the white pigment introduced into the impregnated paper layer in the sample to be measured by comparing the NIR spectrum recorded for the sample to be measured with the calibration model created from the reference samples.

3. Method according to one of the preceding claims, **characterized in that** the white pigment to be determined comprises titanium dioxide, barium sulfate, calcium sulfate, and/or zinc oxide, or a mixture thereof, in particular titanium dioxide.

4. Method according to claims 2-3, **characterized in that** the white pigment to be determined is introduced into the paper layer during core impregnation (or preimpregnation) of the paper layer.

5. Method according to one of claims 2-4, **characterized in that** the impregnating resin contains between 1.0 and 10.0 wt% (based on the total amount of impregnating resin) of titanium dioxide as a white pigment, preferably between 2.0 and 8.0 wt% of titanium dioxide, and most preferably between 3.0 and 5.0 wt% of titanium dioxide.

6. Method according to one of claims 2-5, **characterized in that** the impregnating resin contains between 5 and 10 wt% of barium sulfate and/or zinc oxide as a white pigment.

7. Method according to one of claims 2-6, **characterized in that** the at least one impregnating resin containing the white pigment is a formaldehyde resin, in particular a urea-formaldehyde resin, a melamine-formaldehyde resin, or a mixture thereof, particularly preferably a urea-formaldehyde resin.

8. Method according to one of claims 2-7, **characterized in that** the pre-impregnated/core-impregnated paper layer is surface-impregnated with at least one additional impregnating resin.

9. Method according to claim 8, **characterized in that** the impregnating resin for surface impregnation does not contain any white pigment.

10. Method according to claim 8 or 9, **characterized in that** the impregnating resin used for surface impregnation is a formaldehyde resin, in particular a melamine-formaldehyde resin.

11. Method according to any of the preceding claims, **characterized in that** the paper layer has a basis weight of between 50 and 100 g/m², preferably between 60 and 80 g/m², and in particular between 65 and 75 g/m².

12. Method according to one of the preceding claims, **characterized in that** the determination of the amount of white pigment in the paper layer is performed continuously and online.

13. Method according to one of the preceding claims, **characterized in that** spectral data from the entire recorded spectral range are used to create the calibration model.

14. Method according to one of the preceding claims, **characterized in that** spectral data from the NIR spectral range between 1400 nm and 1600 nm, preferably between 1450 and 1550 nm, are used to create the calibration model, which data are preprocessed using suitable mathematical methods and subsequently subjected to multivariate data analysis.

## Revendications

1. Procédé de détermination de pigment blanc dans une couche de papier imprégnée de résine d'imprégnation, en particulier
de la quantité et du type d'un pigment blanc de la couche de papier,
comprenant les étapes
- de mise à disposition de plusieurs couches de papier imprégnées de résine d'imprégnation avec chacune différentes
quantités de pigment blanc définies quantitativement comme échantillons de référence ;
- d'enregistrement d'au moins un spectre NIR de chacun des échantillons de référence en utilisant au moins une tête de mesure NIR dans une plage de longueurs d'onde entre 1350 nm et 1650 nm, et de manière très particulièrement préférée entre 1400 nm et 1600 nm, en particulier de manière avantageuse entre 1450 nm et 1550 nm ;
- d'association des quantités définies quantitativement différemment de pigment blanc dans les échantillons de référence aux spectres NIR enregistrés desdits échantillons de référence ; et
- de création d'un modèle d'étalonnage pour le lien entre les données spectrales des spectres NIR et les quantités définies quantitativement associées de pigment blanc des échantillons de référence au moyen d'une analyse de données multivariée ;
- de mise à disposition d'au moins un échantillon à mesurer d'une couche de papier contenant un pigment blanc ;
- d'enregistrement d'au moins un spectre NIR de la couche de papier imprégnée en utilisant l'au moins une tête de mesure NIR dans une plage de longueurs d'onde entre 1350 nm et 1650 nm, de manière très particulièrement préférée entre 1400 nm et 1600 nm, en particulier de manière avantageuse entre 1450 nm et 1550 nm ; et
- de détermination de la quantité quantitative du pigment blanc introduit dans la couche de papier imprégnée dans l'échantillon à mesurer en comparant le spectre NIR enregistré pour l'échantillon à mesurer au modèle d'étalonnage créé à partir des échantillons de référence.

2. Procédé selon la revendication 1, **caractérisé en ce que** la quantité de pigment blanc dans une couche de papier est déterminée, le pigment blanc à déterminer étant introduit dans la couche de papier pendant une imprégnation de la couche de papier avec une résine d'imprégnation,
comprenant les étapes
- d'imprégnation de plusieurs couches de papier avec une résine d'imprégnation avec chacune des quantités différentes définies quantitativement du pigment blanc comme échantillons de référence ;
- d'enregistrement d'au moins un spectre NIR de chacun des échantillons de référence en utilisant au moins une tête de mesure NIR dans une plage de longueurs d'onde entre 1350 nm et 1650 nm, et de manière très particulièrement préférée entre 1400 nm et 1600 nm, en particulier de manière avantageuse entre 1450 nm et 1550 nm ;
- d'association des quantités définies quantitativement différemment de pigment blanc dans les échantillons de référence aux spectres NIR enregistrés desdits échantillons de référence ; et
- de création d'un modèle d'étalonnage pour le lien entre les données spectrales des spectres NIR et les quantités définies quantitativement associées de pigment blanc des échantillons de référence au moyen d'une analyse de données multivariée ;
- de mise à disposition d'au moins un échantillon à mesurer d'une couche de papier imprégnée par imprégnation d'au moins une couche de papier avec une résine d'imprégnation contenant du pigment blanc,
- d'enregistrement d'au moins un spectre NIR de la couche de papier imprégnée en utilisant l'au moins une tête de mesure NIR dans une plage de longueurs d'onde entre 1350 nm et 1650 nm, de manière très particulièrement préférée entre 1400 nm et 1600 nm, en particulier de manière avantageuse entre 1450 nm et 1550 nm ; et
- de détermination de la quantité quantitative du pigment blanc introduit dans la couche de papier imprégnée dans l'échantillon à mesurer en comparant le spectre NIR enregistré pour l'échantillon à mesurer au modèle d'étalonnage créé à partir des échantillons de référence.

3. Procédé selon l'une quelconque des revendications précédentes, **caractérisé en ce que** le pigment blanc à déterminer comprend du dioxyde de titane, du sulfate de baryum, du sulfate de calcium et/ou de l'oxyde de zinc, ou un mélange de ceux-ci, en particulier du dioxyde de titane.

4. Procédé selon la revendication 2-3, **caractérisé en ce que** le pigment blanc à déterminer est introduit dans la couche de papier pendant une imprégnation à cœur (ou préimprégnation) de la couche de papier.

5. Procédé selon l'une quelconque des revendications 2 à 4, **caractérisé en ce que** la résine d'imprégnation contient entre 1,0 et 10,0 % en poids (par rapport à la quantité totale de résine d'imprégnation) de dioxyde de titane en tant que pigment blanc, de manière préférée entre 2,0 et 8,0 % en poids de dioxyde de titane, en particulier de manière préférée entre 3,0 et 5,0 % en poids de dioxyde de titane.

6. Procédé selon l'une quelconque des revendications 2 à 5, **caractérisé en ce que** la résine d'imprégnation contient entre 5 et 10 % en poids de sulfate de baryum et/ou d'oxyde de zinc en tant que pigment blanc.

7. Procédé selon l'une quelconque des revendications 2 à 6, **caractérisé en ce que** l'au moins une résine d'imprégnation contenant le pigment blanc est une résine de formaldéhyde, en particulier une résine d'urée-formaldéhyde, une résine de mélamine-formaldéhyde ou un mélange de celles-ci, en particulier de manière préférée une résine d'urée-formaldéhyde.

8. Procédé selon l'une quelconque des revendications 2 à 7, **caractérisé en ce que** la couche de papier préimprégnée/imprégnée à cœur est imprégnée en surface avec au moins une autre résine d'imprégnation.

9. Procédé selon la revendication 8, **caractérisé en ce que** la résine d'imprégnation pour l'imprégnation de surface ne contient pas de pigment blanc.

10. Procédé selon la revendication 8 ou 9, **caractérisé en ce que** la résine d'imprégnation utilisée pour l'imprégnation de surface est une résine de formaldéhyde, en particulier une résine de mélamine-formaldéhyde.

11. Procédé selon l'une quelconque des revendications précédentes, **caractérisé en ce que** la couche de papier présente un poids de papier entre 50 et 100 g/m², de manière préférée entre 60 et 80 g/m², en particulier entre 65 et 75 g/m².

12. Procédé selon l'une quelconque des revendications précédentes, **caractérisé en ce que** la détermination de la quantité de pigment blanc dans la couche de papier est effectuée en continu et en ligne.

13. Procédé selon l'une quelconque des revendications précédentes, **caractérisé en ce que** des données spectrales issues de l'ensemble du domaine spectral enregistré sont utilisées pour la création du modèle d'étalonnage.

14. Procédé selon l'une quelconque des revendications précédentes, **caractérisé en ce que** des données spectrales issues du domaine spectral NIR compris entre 1400 nm et 1600 nm, de manière préférée entre 1450 et 1550 nm, sont utilisées pour la création du modèle d'étalonnage, lesquelles sont prétraitées au moyen de procédés mathématiques appropriés et sont ensuite amenées à l'analyse de données multivariée.
